Europäisches Patentamt

**European Patent Office**

Office européen des brevets

(11) Veröffentlichungsnummer: **0 023 618**
**B1**

(12) **EUROPÄISCHE PATENTSCHRIFT**

(45) Veröffentlichungstag der Patentschrift:
26.02.86

(21) Anmeldenummer: 80104071.8

(22) Anmeldetag: 14.07.80

(51) Int. Cl.⁴: **E 04 B 1/86,** E 04 F 13/12,
B 32 B 15/08, E 04 B 5/54

(54) Schallschluckende Bauplatte und Verfahren zu ihrer Herstellung.

(30) Priorität: **25.07.79 DE 2930123**

(43) Veröffentlichungstag der Anmeldung:
**11.02.81 Patentblatt 81/6**

(45) Bekanntmachung des Hinweises auf die Patenterteilung:
**26.02.86 Patentblatt 86/9**

(84) Benannte Vertragsstaaten:
**AT BE CH DE FR GB IT LI LU NL SE**

(56) Entgegenhaltungen:
**AU - B - 2 565 071**
**DE - A - 1 609 413**
**DE - A - 2 618 385**
**DE - U - 1 935 186**
**GB - A - 786 377**

(73) Patentinhaber: **Wilhelmi Werke GmbH & Co.KG:,**
**Postfach 55, D-6335 Lahnau (DE)**

(72) Erfinder: **Wilhelmi, Günther, In den Weinbergen 8,**
**D-6335 Lahnau-Dorlar (DE)**
Erfinder: **Schmidt-Raiser, Karl-August,**
**Taunusstrasse 22, D-6330 Wetzlar 15 (DE)**

(74) Vertreter: **Patentanwälte Dipl.-Ing. R. Schlee Dipl.-Ing. A.**
**Missling, Bismarckstrasse 43, D-6300 Giessen (DE)**

LIBER, STOCKHOLM 1986

## Beschreibung

Die Erfindung bezieht sich auf eine schallschluckende Bauplatte zur Verkleidung von Innenraumwänden, insbesondere eine Deckenplatte, bestehend aus einer im Abstand von der Wand anzuordnenden dünnen, nicht schallschluckenden Tragplatte aus gelochtem Metallblech und einer die eine Seite des Metallblechs bedeckenden schallschluckenden Schicht.

Schallschluckende Bauplatten werden dort angewendet, wo die akustischen Verhältnisse eines Raumes beeinflußt werden sollen. Am weitesten verbreitet ist die Verwendung als Deckenplatte, obwohl auch schallschluckende Wandplatten eingebaut werden. Bei Decken aus schallschluckenden Bauplatten spricht man auch von Akustikdecken. Wenn im folgenden von Akustikdecken gesprochen wird, gelten diese Ausführungen auch für Akustik-Wandverkleidungen.

Schallschluckende Akustikdecken lassen sich in zwei Hauptarten einteilen. Bei der ersten Hauptart werden poröse Plattenkörper verwendet, z.B. Holzspanplatten oder Mineralfaserplatten. Diese Platten sind selber schallschluckend und können ohne zusätzliche schallschluckende Einrichtungen zur Herstellung einer Akustikdecke verwendet werden. Die Platten sind selbstragend und können aufgrund ihrer Tragfähigkeit mit verhältnismäßig großen Abmessungen hergestellt werden. Es ist auch bekannt, solche an sich schallschluckenden Bauplatten an ihrer Sichtseite mit einer mikroporösen· Folie zu belegen, wie sie in der DE—C—1 053 173 beschrieben ist. In diesem Fall hat die mikroporöse Folie im allgemeinen nicht die Aufgabe, die schallschluckenden Eigenschaften der Trägerplatte zu verbessern, sondern dient zur Erzielung einer anderen Oberflächenstruktur ohne gleichzeitige Beeinträchtigung der Schallschluckeigenschaften, da schallschluckende Platten architektonischen Anforderungen nicht immer voll entsprechen, wenn ein Sichtseitenüberzug nicht vorhanden ist. Auch kann durch Aufbringen einer mikroporösen Folie, die mit einem porösen Überzug versehen wird, die Platte abwaschbar gemacht werden.

Bei der zweiten Hauptart, von der die Erfindung ausgeht und die in der Beschreibungseinleitung der bereits genannten DE—C—1 053 173 als Stand der Technik erwähnt ist, werden gelochte Trägerplatten verwendet, die sowohl aus Metall als auch aus nichtmetallischen Werkstoffen bestehen können, wie z.B. aus Gips, Holz, insbesondere Sperrholz oder Asbestzement. Diese Platten sind selber nicht schallschluckend. Die Schallabsorption wird durch eine verhältnismäßig dicke Lage aus schallschluckendem Material, z.B. Matten aus Glasfasern oder aus Asbestfasern, bewirkt, das auf die Rückseite der Platte aufgelegt wird. Dabei kann das schallschluckende Material auf die Plattengröße zugeschnitten sein, oder es können mehrere Matten verwendet werden, die mehrere Platten überdecken. Die Schallwellen durchdringen die Löcher und werden in dem schallschluckenden Material gedämpft. Nachteilig bei dieser Art von Akustikdecken ist, daß das schallschluckende Material im Laufe der Zeit verschmutzt und keine Möglichkeit zur Reinigung besteht. Beim Herausnehmen einzelner Deckenplatten muß auch das schallschluckende Material mit herausgenommen werden, was oft mit teilweiser Zerstörung des Materials und entsprechendem Schmutzanfall verbunden ist, insbesondere wenn große Matten mehrere Platten überdecken. Auch ohne Reparaturarbeiten können Partikel des Schallschluckmaterials durch die Löcher herausfallen. Eine Dekontaminierung von Schallschluckmaterial, das hinter den Platten liegt, ist nicht möglich. Bei der Herstellung von Akustikdecken besteht der Nachteil, daß die Verlegung des schallschluckenden Materials mit Staubentwicklung verbunden ist, was auch gesundheitsschädlich sein kann, insbesondere bei der Verarbeitung von Asbestfasermaterial.

Der Erfindung liegt die Aufgabe zugrunde, eine Bauplatte der eingangs genannten Art so auszubilden, daß bei guten Schallschluckeigenschaften auf eine Hinterlegung der Tragplatte mit Absorptionsmaterialien verzichtet werden kann.

Diese Aufgabe wird nach der Erfindung dadurch gelöst, daß die schallschluckende Schicht aus einer die Sichtseite der Bauplatte bildenden, mit dem Metallblech fest verbundenen mikroporösen Schicht mit einer Dicke von höchstens 5 mm und einem Strömungswiderstand zwischen 10 und 1.000 $g \cdot cm^{-2} \cdot s^{-1}$ besteht, die auf ihrere Außenseite mit einer porösen Lackschicht bedeckt ist.

Solche Bauplatten können beliebig geformt werden, da sich die Blechplatte in jede gewünschte Form bringen läßt. Durch den Überzug mit der dünnen schallschluckenden Schicht, deren Dicke zum Unterschied gegen schallschluckende Matten auf der Oberseite von Blechplatten gering ist und die entsprechend der eingangs erwähnten DE—C—1 053 173 ausgebildet sein kann, erhält man eine zusammenhängende Plattenoberfläche, da diese Schicht die Löcher in der Blechplatte abdeckt. Die Bauplatte hat damit die gleichen vorteilhaften Eigenschaften für die Bearbeitung und für den Gebrauch, da ein Hantieren mit Fasermatten nicht erforderlich ist und die Bauplatte keine sichtbaren Löcher aufweist, durch die Schmutz hindurchdringen kann oder durch die oberhalb der Platte befindliche Partikel in den Raum fallen können. Die Schallvernichtung wird im Bereich der Lochungen der Blechplatte im Zusammenwirken mit dem hinter der Blechplatte befindlichen Luftraum erreicht. Der Schallschluckeffekt kann durch den Lochanteil in der Blechplatte beeinflußt werden, wie dies von Decken der eingangs besprochenen zweiten Hauptart her bekannt ist. Je nach Lochanteil ist der erfaßte Frequenzbereich verschieden. Auch kann der Frequenzbereich, wie dies ebenfalls an sich bekannt ist, durch Wahl der Höhe des Raumes oberhalb der Blechplatte berücksichtigt werden. Die Bauplatte ermöglicht eine breitbandige Schallabsorption, d.h. eine gute Absorption in einem großen Frequenzbereich des Schalles. Die poröse Lackschicht ermöglicht eine Reinigung der Bauplatte. Auch lassen sich mit der Lackschicht dekorative Wirkungen erzielen. Dem Lack können bakterizide und/oder fungizide Zusätze beigemengt werden.

Der Dickenbereich der schallschluckenden Schicht kann zwischen etwa 0,2 mm und etwa 5 mm liegen. Vorzugsweise beträgt die Dikke etwa 0,5 mm.

Die Blechdicken können den Erfordernissen entsprechend variieren. Wenn das die Tragplatte bildende Metallblech ein vorzugsweise rostgeschütztes, z.B. verzinktes Stahlblech ist, so sollte dessen Dicke zwischen etwa 0,4 und etwa 2 mm liegen. Vorzugsweise beträgt sie etwa 1 mm. Bei anderen Metallen, z.B. bei Aluminium, können ähnliche Dicken gewählt werden.

Es ist sowohl möglich, die schallschluckende Schicht als eine durch ein Klebemittel mit dem Metallblech verbundene mikroporöse Folie auszubilden. Sie kann aber auch aus einem im formlosen Zustand auf das Metallblech aufgetragenen Material, z.B. aus organischen oder anorganischen Fasern bestehen, das durch ein handelsübliches organisches Bindemittel, z.B. Carbamidharz oder Wasserglas, gebunden ist. In beiden Fällen können die in der DE—C—1 053 173 angegebenen Verfahren angewendet werden. Der Ausdruck Folie wird im vorliegenden Zusammenhang als Oberbegriff verwendet und umfaßt z.B. auch Vliese.

Das die Tragplatte bildende Metallblech kann Versteifungssikken, z.B. diagonal angeordnete Sicken, die sich zwischen den Ecken einer quadratischen Platte erstrecken, aufweisen, wobei die Sicken vorzugsweise nach der Rückseite der Platte vorspringen und ihre Hohlräume an der Sichtseite der Platte durch die schallschluckende Schicht, vorzugsweise eine mikroporöse Folie, überdeckt sind. Durch die Sicken wird das Aussehen der Platte dank der schallschluckenden Schicht, die die Sickenvertiefungen überdeckt, nicht beeinträchtigt. Die Überdeckung läßt sich besonders perfekt mit einer mikroporösen Folie erreichen. Es ist jedoch auch denkbar, mittels einer auf die Platten aufgetragenen Schicht eine ebene Fläche zu erzeugen, wobei dann im Bereich der Sickenvertiefungen eine gewisse Materialanhäufung vorhanden sein mußte oder die Sickenvertiefungen vor dem Aufbringen der schallschluckenden Schicht ausgefüllt werden müßten.

Die Erfindung gestattet es, die Sichtseite der Tragplatte zu profilieren, ihr z.B. die Form einer vierseitigen Pyramide mit kleinem Steigungswinkel zu geben. Man kann eine Platte auch aus zwei oder mehr Metallblechen zusammensetzen, die an Randabkantungen miteinander verbunden sind, z.B. durch Punktschweißung, wobei die Fuge an der Sichtseite von der schallschluckenden Schicht, vorzugsweise einer schallschluckenden mikroporösen Folie, überdeckt ist.

Ein vorteilhaftes Verfahren für die Herstellung einer Bauplatte, bei der die schallschluckende Schicht durch eine aufgebrachte Folie gebildet ist, besteht darin, daß auf ein nicht oder erste teilweise verformtes Metallblech eine mikroporöse Folie oder ein Träger für eine solche Folie in unverfestigtem, formbarem Zustand aufgebracht und mit dem Metallblech durch Klebung verbunden wird, daß daran anschließend das Metallblech samt der Folie bzw. dem Träger verformt wird und daß die Folie nach der Verformung durch Aufbringung der porösen Lackschicht verfestigt wird. Durch das Aufbringen der Folie im noch nicht verfestigten Zustand vermeidet man ein Aufreißen beim Abkanten oder sonstigen Formvorgängen am Blech, wobei das Aufbringen vereinfacht wird, da es auf einer ebenen Fläche erfolgen kann.

Wenn die schallschluckende Schicht aus einem im formlosen Zustand auf das Metallblech aufgetragene Material besteht, ist es vorteilhaft, zunächst ein ebenes gelochtes Metallblech in seine endgültige Form zu bringen und daran anschließend die schallschluckende Schicht auf dem Blech aufzubauen. Auch dadurch vermeidet man eine Bildung von Rissen in der schallschluckenden Schicht.

Die Erfindung wird anhand der Zeichnung weiterhin erläutert. Es zeigen:

Fig. 1 eine perspektivische Unteransicht einer Akustikdecke, in der erfindungsgemäße Bauplatten verwendet sind,

Fig. 2 eine perspektivische Ansicht einer einzelnen Bauplatte, die pyramidenförmig ausgebildet ist,

Fig. 3 eine perspektivische Ansicht einer ebenen Bauplatte,

Fig. 4 einen Teilschnitt durch die Platte nach Fig. 3 entsprechend der Linie IV—IV in Fig. 3 in einem vergrößerten Maßstab,

Fig. 5 eine teilweise Draufsicht auf eine Platte entsprechend dem Pfeil V in Fig. 4,

Fig. 6 einen Schnitt durch den Randbereich der Platte nach Fig. 3 entsprechend der Linie VI—VI in Fig. 3 in einem vergrößerten Maßstab und

Fig. 7 einen vertikalen Teilschnitt durch eine Bauplatte gemäß einer weiteren Ausführungsform der Erfindung.

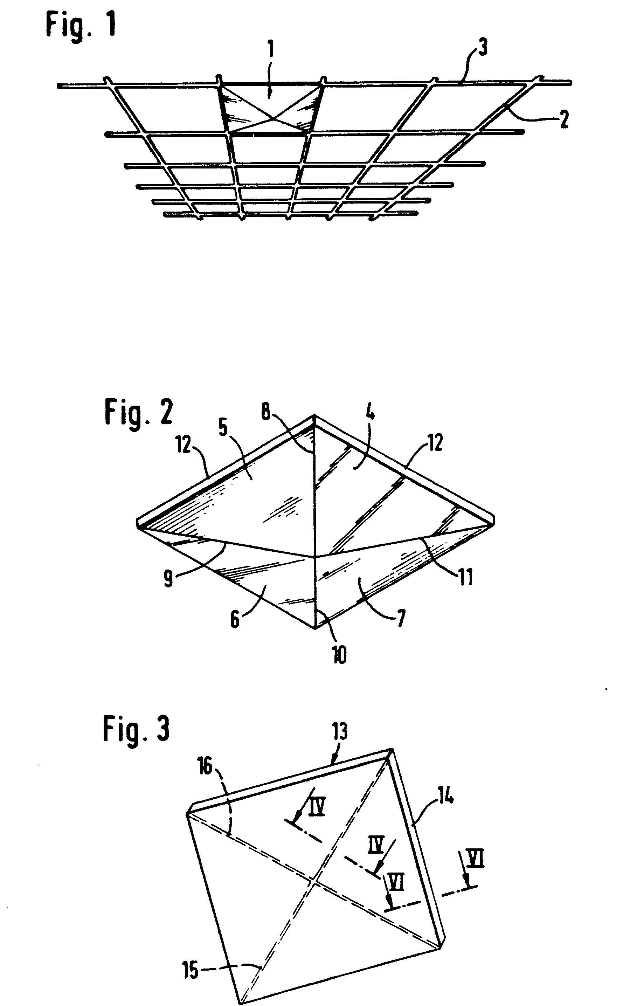

Die Deckenkonstruktion nach Fig. 1 hat als Tragvorrichtung für Deckenplatten 1 ein System aus rechtwinklig zueinander angeordneten Bandrasterprofilen 2 und 3. Durch diese Bandrasterprofile werden quadratische Felder gebildet, die von den Deckenplatten 1 ausgefüllt werden. Die dargestellte Platte hat eine quadratische Grundrißform und ist so profiliert, daß sie eine vierseitige Pyramide mit den geneigten Flächen 4—7 (siehe hierzu auch Fig. 2) bildet. Die Flächen 4—7 stoßen an Kanten 8—11 aneinander. An den Rändern hat die Platte nach oben gerichtet Abkantungen 12.

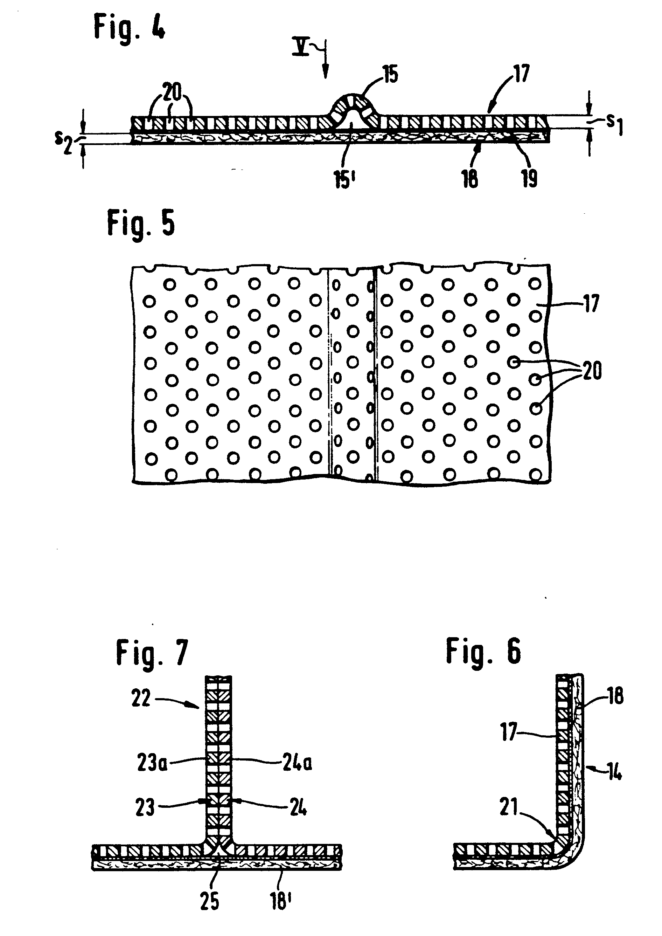

Die Formgebung der Platte kann beliebig sein. In Fig. 3 ist eine ebene Platte 13 dargestellt, die ebenfalls eine quadratische Grundrißform und Randabkantungen 14 aufweist. Über die Platte hinweg erstrecken sich zwei diagonale Sicken 15 und 16, die zur Versteifung der Platte dienen, jedoch von der Sichtseite her verdeckt sind. Die Erfindung befaßt sich nicht mit der beschriebenen Grundform der Platten, sondern mit deren Aufbau, der nachfolgend anhand der Fig. 4 beschrieben werden soll.

Die Platte 13 (entsprechend auch die Platte 1 nach Fig. 2) hat eine Trägerschicht 17 in Form eines gelochten Bleches und eine schallschluckende Schicht 18, die über eine dünne Kleberschicht 19 mit dem Blech 17 verbunden ist.

Das gelochte Blech 17 ist von vielen Löchern 20 durchbrochen, deren Anordnung aus Fig. 5 zu ersehen ist. Fig. 5 zeigt, daß die Löcher 20 gleichmäßig verteilt sind. Das Muster der Verteilung kann von Fig. 5 abweichen. Die Lochanordnung und die Lochgröße können in weiten Grenzen variieren. Die Lochanteile, d.h. die Gesamtfläche aller Löcher kann im Bereich von 4%—40% der Gesamtfläche der Platte liegen. Die Dicke $s_1$ des Bleches hängt von dem Material des Bleches, vom Lochanteil und von der Gesamtgröße der Platte ab. Eine übliche Dicke bei Verwendung von Stahlblech ist 1 mm.

Die schallschluckende Schicht 18 kann auf das Blech aufgebaut sein oder aber eine separat hergestellte mikroporöse Folie sein, die auf das Blech aufgeklebt ist. Es sei angenommen, daß es sich bei der gezeichneten Bauplatte um eine aufgeklebte Folie handelt. Die Dicke $s_2$ dieser Folie kann wieder in verhältnismäßig weiten Grenzen schwanken, z.B. zwischen 0,02 und 5 mm liegen. Eine übliche Dicke ist 0,5 mm. Im allgemeinen wird die Dicke der schallschluckenden Schicht höchstens 2 mm betragen. Größere Dicken werden nur ausnahmsweise vorkommen.

Die schallschluckende Folie ist vorzugsweise entsprechend der schon mehrfache erwähnten DE—PS 1 053 173 beschaffen, d.h. sie ist aus einem vorzugsweise nicht brennbaren Faserstoffträger, z.B. in Vlies- oder Gewebeform, hergestellt, wobei der Faserstoffträger mit einem beim Erhärten offene Mikroporen bildenden Stoffgemisch versetzt ist. Die Folie ist vorzugsweise mit einem Überzug aus einem fadenziehenden Lack überzogen, z.B. mit Chlorkautschuk, der in Methylenchlorid gelöst ist. Dieser Überzug wird vorzugsweise aufgebracht, nachdem die Folie auf dem Blech 17 befestigt ist.

Bei der Herstellung der Platte wird vorzugsweise derart vorgegangen, daß zunächst die Sicken 15 angebracht werden. Die Sicken 15 erstrecken sich nach oben, so daß an der durch die Folie 18 gebildeten Sichtseite keine Vorsprünge vorhanden sind. Danach wird die Folie 18 mittels eines Klebemittels 19 festgemacht. Danach werden die Randabkantungen 14 hergestellt. Danach kann die Platte noch lackiert werden.

Durch die Folie 18 wird trotz der Sicken 15 eine glatte Außenfläche gebildet. Der Hohlraum 15', den die Sicke an der Unterseite der Blechplatte 17 bildet, wird von der Folie 18 überbrückt und ist demgemäß nicht sichtbar.

Die Fig. 4, 6 und 7 sind gegenüber der natürlichen Größe etwa im Maßstab 5:1 vergrößert. Fig. 6 zeigt den Bereich der Randabkantung 14. An dieser Randabkantung besteht eine Abbiegung 21 von 90°. Ein Aufreißen der Folie im Abbiegungsbereich wird vermieden, wenn man die Abbiegung entweder vor dem Aufbringen der Folie herstellt oder die Folie erste dann verfestigt (nachdem sie schon vor der Abbiegung aufgebracht wurde), wenn die Abbiegung hergestellt ist.

Fig. 7 zeigt einen Teilschnitt durch eine insgesamt mit 22 bezeichnete Platte, die aus zwei oder mehr Blechen 23 und 24 zusammengesetzt ist. Die Bleche 23, 24 haben Randabkantungen 23a und 24a, die miteinander verbunden sind, z.B. durch Punktschweißung. Die an der Unterseite befindliche Fuge 25 ist auch hier mit einer mikroporösen Folie 18' überbrückt und demgemäß nicht sichtbar. Die Erfindung eröffnet also die Möglichkeit, die Konstruktion von Bauplatten vielfach abzuwandeln, ohne daß dadurch eine Beeinträchtigung der Sichtseite entsteht, da Fugensicken oder andere unerwünschte Markierungen durch den schallschluckenden Überzug kaschiert werden.

**Patentansprüche**

1. Schallschluckende Bauplatte (1; 13) zur Verkleidung von Innenraumwänden, insbesondere Deckenplatte, bestehend aus einer im Abstand von der Wand anzuordnenden dünnen, nicht schallschluckenden Tragplatte (17; 22) aus gelochtem Metallblech und einer die eine Seite des Metallblechs bedeckenden schallschluckenden Schicht (18; 18'), dadurch gekennzeichnet, daß die schallschluckende Schicht (18; 18') aus einer die Sichtseite der Bauplatte bildenden, mit dem Metallblech fest verbundenen mikroporösen Schicht mit einer Dicke ($s_2$) von höchstens 5 mm und einem Strömungswiderstand zwischen 10 und 1.000 $g \cdot cm^{-2} \cdot s^{-1}$ besteht, die auf ihrer Außenseite mit einer porösen Lackschicht bedeckt ist.

2. Bauplatte nach Anspruch 1, dadurch gekennzeichnet, daß die schallschluckende Schicht (18; 18') zwischen etwa 0,2 und etwa 5 mm, vorzugsweise etwa 0,5 mm dick ist.

3. Bauplatte nach einem der vorhergehenden Ansprüche, dadurch gekennzeichnet, daß das die Tragplatte (17; 22) bildenden Metallblech ein vorzugsweise rostgeschütztes, z.B. verzinktes Stahlblech mit einer Dicke zwischen etwa 0,4 und etwa 2 mm, vorzugsweise von etwa 1 mm ist.

4. Bauplatte nach einem der vorhergehenden Ansprüche, dadurch gekennzeichnet, daß die schallschluckende Schicht (18; 18') eine durch ein Klebmittel (19) mit dem Metallblech (17; 22) verbundene mikroporöse Folie ist.

5. Bauplatte nach einem der Ansprüche 1 bis 3, dadurch gekennzeichnet, daß die schallschluckende Schicht aus einem im formlosen Zustand auf das Metallblech aufgetragenen Material, z.B. aus organischen oder anorganischen Fasern, besteht, das durch ein handelsübliches organisches Bindemittel, z.B. Carbamidharz oder Wasserglas, gebunden ist.

6. Bauplatte nach einem der vorhergehenden Ansprüche, dadurch gekennzeichnet, daß das die Tragplatte (17) bildende Metallblech Versteifungssicken, z.B. diagonal angeordnete Sicken (15; 16), die sich zwischen den Ecken einer quadratischen Platte erstrecken, aufweist und daß die Sikken (15; 16) vorzugsweise nach der Rückseite der Platte vorspringen und ihre Hohlräume (15') an der Sichtseite der Platte durch die schallschluckende Schicht, vorzugsweise eine mikroporöse Folie (18), überdeckt sind.

7. Bauplatte nach einem der vorhergehenden Ansprüche, dadurch gekennzeichnet, daß die Sichtseite der Tragplatte profiliert ist, z.B. die Form einer vierseitigen Pyramide mit kleinem Steigungswinkel aufweist (Fig. 1, 2).

8. Bauplatte nach einem der vorhergehenden Ansprüche, dadurch gekennzeichnet, daß die Tragplatte aus zwei oder mehr Metallblechen (23; 24) zusammengesetzt ist, die an Randabkantungen (23a bzw. 24a) miteinander verbunden sind, z.B. durch Punktschweißung, und daß die Fuge (25) an der Sichtseite von der schallschluckenden Schicht, vorzugsweise einer schallschluckenden mikroporösen Folie (18'), überdeckt ist (Fig. 7).

9. Verfahren zur Herstellung einer Bauplatte nach einem der Ansprüche 4 oder 6 bis 8, dadurch gekennzeichnet, daß auf ein nicht oder erst teilweise verformtes Metallblech eine mikroporöse Folie oder ein Träger für eine solche Folie in unverfestigtem, formbarem Zustand aufgebracht und mit dem Metallblech durch Klebung verbunden wird, daß daran anschließend das Metallblech samt der Folie bzw. dem Träger verformt wird und daß die Folie nach der Verformung durch Aufbringen der porösen Lackschicht verfestigt wird.

10. Verfahren zur Herstellung einer Bauplatte nach einem der Ansprüche 5 bis 8, dadurch gekennzeichnet, daß zunächst ein ebenes gelochtes Metallblech in seine endgültige Form gebracht wird und daß daran anschließend die schallschlukkende Schicht auf dem Blech aufgebaut wird.

**Revendications**

1. Plaque de construction (1; 13) absorbant les sons pour le revêtement de parois intérieures, notamment faux-plafonds, consistant en une plaque porteuse mince (17; 22) n'absorbant pas les sons, destinée à être placée à distance de la paroi, en tôle métallique perforée, et une couche (18; 18') absorbant les sons et recouvrant une des faces de ladite plaque porteuse, caractérisée en ce que la couche absorbant les sons (18; 18') est constituée d'une couche microporeuse liée solidement à la tôle métallique et constituant la face visible de la plaque de construction, cette couche microporeuse ayant une épaisseur ($s_2$) d'au plus 5 mm et une perméabilité comprise entre 10 et 1000 g $\cdot$ cm$^{-2}$ $\cdot$ s$^{-1}$, recouverte sur sa face extérieure d'une couche de laque poreuse.

2. Plaque de construction selon la revendication 1, caractérisée en ce que la couche absorbant les sons (18; 18') a une épaisseur comprise entre environ 0,2 et 5 mm, de préférence voisine de 0,5 mm.

3. Plaque de construction selon l'une des revendications précédentes, caractérisée en ce que la tôle métallique formant la plaque porteuse est une tôle d'acier d'épaisseur comprise entre environ 0,4 mm et environ 2 mm, de préférence voisine de 1 mm, de préférence protégée contre la corrosion, par exemple par zincage.

4. Plaque de construction selon l'une des revendications précédentes, caractérisée en ce que la couche absorbant les sons (18; 18') est constituée d'une feuille microporeuse liée à la tôle métallique (17; 22) par un moyen de collage (19).

5. Plaque de construction selon l'une des revendications 1 à 3, caractérisée en ce que la couche absorbant les sons est constituée d'un matériau qui est disposé sur la tôle métallique sans avoir de forme propre, par exemple des fibres organiques ou minérales, ce matériau étant lié par un liant organique de type courant, par exemple une résine carbamide, ou bien du silicate de potassium.

6. Plaque de. construction selon l'une des revendications précédentes, caractérisée en ce que la tôle métallique constituant la plaque porteuse (17) présente des nervures de raidissement (15; 16) qui s'étendent entre les angles d'une plaque carrée, par exemple suivant les diagonales, et en ce que ces nervures (15; 16) font saillie de préférence sur la face arrière de la plaque, leur volume intérieur (15') du côté de la face visible de la plaque de construction étant recouvert par la couche absorbant les sons, celle-ci étant de préférence constituée d'une feuille microporeuse (18).

7. Plaque de construction selon l'une des revendications précédentes, caractérisée en ce que la face visible de la plaque porteuse est profilée, par exemple à la forme d'une pyramide à quatre faces avec une faible inclinaison.

8. Plaque de construction selon l'une des revendications précédentes, caractérisée en ce que la plaque porteuse est constituée de deux tôles métalliques au plus (23; 24), qui sont reliées ensemble par leurs bords pliés (23a; 24a) par soudure par points, et en ce que la jointure (25) est recouverte sur la face visible par la couche absorbant les sons, celle-ci étant de préférence constituée d'une couche microporeuse (18')

9. Procédé d'obtention d'une plaque de construction selon l'une des revendications 4 ou 6 à 8, caractérisé en ce qu'on dépose sur une tôle métallique non mise en forme, ou seulement partiellement mise en forme, une feuille microporeuse ou un support pour une telle feuille dans un état déformable, non durci, et on lie cette feuille ou ce support à la tôle par collage, en ce que, immédiatement après, on met en forme la tôle avec ladite feuille ou ledit support, et en ce qu'après le formage, on rigidifie la feuille par apport de la couche de laque poreuse.

10. Procédé pour l'obtention d'une plaque de construction selon l'une des revendications 5 à 8, caractérisé en ce qu'on amène d'abord une plaque perforée plane à sa forme finale et en ce qu'immédiatement après on met en place la couche absorbant les sons sur ladite tôle.

## Claims

1. A sound absorbing building board (1; 13) for covering interior walls, more particularly a ceiling board, comprising a thin, non sound absorbing supporting plate (17; 22), which is made from perforated metal plate and which is arranged at a distance from the wall, and a sound absorbing layer (18; 18') covering one side of the metal plate, characterised in that the sound absorbing layer (18; 18') comprises a microporous layer, which forms the visible side of the building board, which is securely connected to the metal plate, which has a thickness ($s_2$) of 5 mm maximum and a flow resistance of between 10 and 1,000 $g \cdot cm^{-2} \cdot s^{-1}$, and which is covered on its outside with a porous layer of enamel.

2. A building board according to claim 1, characterised in that the sound absorbing layer (18; 18') has a thickness of between approximately 0.2 and approximately 5 mm, preferably approximately 0.5 mm.

3. A building board according to any one of the preceding claims, characterised in that the metal plate forming the supporting plate (17; 22) is preferably a rust-proof, e.g. galvanised steel plate with a thickness of between approximately 0.4 and approximately 2 mm, preferably approximately 1 mm.

4. A building board according to any one of the preceding claims, characterised in that the sound absorbing layer (18, 18') is a microporous foil which is connected to the metal plate (17; 22) by means of an adhesive (19).

5. A building board according to any one of claims 1 to 3, characterised in that the sound absorbing layer is made from a material, e.g. of organic or non organic fibre, which is applied to the metal plate in an unshaped state and which is adhered by means of a conventional organic binding agent, e.g. carbamide resin or water glass.

6. A building board according to any one of the preceding claims, characterised in that the metal plate forming the supporting board (17) comprises reinforcing corrugations, e.g. diagonally arranged corrugations (15, 16), which extend between the corners of a square board, and the corrugations preferably project towards the rear of the board and their cavities (15') are covered on the visible side of the board by the sound absorbing layer, preferably a microporous foil (18).

7. A building board according to any one of the preceding claims, characterised in that the visible side of the support plate is profiled, e.g. it has the shape of a four-sided pyramid with a small angle of inclination (Fig. 1, 2).

8. A building board according to any one of the preceding claims, characterised in that the supporting plate is formed by two or more metal plates (23; 24), which are joined together at peripheral borders (23a or 24a), e.g. by spot welding, and the seam (25) is covered on the visible side by the sound absorbing layer, preferably a sound absorbing microporous foil (18') (Fig. 7).

9. A process for manufacturing a building board according to any one of claims 4 or 6 to 8, characterised in that a microporous foil or a support for a foil of this type is placed in an unhardened, moldable state onto an unshaped or only partially shaped metal plate and is bonded to the metal plate by adhesion, subsequently the metal plate and the foil or support is shaped and the foil is hardened following the shaping by the application of the porous enamel layer.

10. A process for manufacturing a building board according to any one of claims 5 to 8, characterised in that a flat perforated metal plate is firstly given its final shape and the sound absorbing layer is then applied to the metal plate.

**Fig. 1**

**Fig. 2**

**Fig. 3**

# Fig. 4

# Fig. 5

# Fig. 7

# Fig. 6